Europäisches Patentamt

European Patent Office

Office européen des brevets

(19)

(11) Veröffentlichungsnummer: **0 289 934 B1**

(12) **EUROPÄISCHE PATENTSCHRIFT**

(45) Veröffentlichungstag der Patentschrift: 27.11.91

(51) Int. Cl.⁵: **H01G 1/035**

(21) Anmeldenummer: 88106782.1

(22) Anmeldetag: 27.04.88

(54) **Elektrisches Bauelement in Chip-Bauweise und Verfahren zu seiner Herstellung.**

(30) Priorität: 05.05.87 DE 3714931

(43) Veröffentlichungstag der Anmeldung:
09.11.88 Patentblatt 88/45

(45) Bekanntmachung des Hinweises auf die
Patenterteilung:
27.11.91 Patentblatt 91/48

(84) Benannte Vertragsstaaten:
AT CH DE FR GB IT LI

(56) Entgegenhaltungen:
EP-A- 0 130 386          EP-A- 0 162 149
DE-U- 8 504 781          FR-A- 2 431 170
FR-A- 2 457 005          FR-A- 2 555 356
GB-A- 1 470 630          GB-A- 2 102 632
US-A- 3 946 290          US-A- 4 205 365

JOURNAL OF ELECTRONIC ENGINEERING,
Band 20, Nr. 193, Januar 1983, Seiten 38-41,
Tokyo, JP; T. ISHIDA: "A primer on chip-type
components"

(73) Patentinhaber: SIEMENS AKTIENGESELL-
SCHAFT
Wittelsbacherplatz 2
W-8000 München 2(DE)

(72) Erfinder: Behn, Reinhard, Dipl.-Phys.
Frasdorferstrasse 6d
W-8000 München 90(DE)

## Beschreibung

Die Erfindung betrifft ein elektrisches Bauelement in Chip-Bauweise, das mit einer Isolierumhüllung versehen ist, sowie innere elektrisch leitende Stromzuführungen und damit durch Öffnungen in der Isolierumhüllung elektrisch verbundene äußere Anschlußelemente aufweist.

Elektrische Bauelemente in Chip-Bauweise, die diese Merkmale aufweisen, sind beispielsweise aus der US-PS 4 617 609, der FR-PS 2 555 356 und der nicht vorveröffentlichten europäischen Patentanmeldung EP-A (amtliches Aktenzeichen 86116680.9; unser Zeichen VPA 85 P 7029 E) bekannt.

Die vorliegende Erfindung betrifft ferner ein Verfahren zur Herstellung solcher Bauelemente, bei dem mehrere elektrische Bauelemente je einzeln in Ausnehmungen einer Form eingesetzt, mit aushärtbarem Gießharz vergossen und nach dem Aushärten in der Form zusammen mit dem ausgehärtetem Gießharz in Einzelstücke zerteilt wird, die je ein mit einer Isolierumhüllung versehenes elektrisches Bauelement darstellen.

Verfahren, die diese Verfahrensschritte aufweisen, sind für elektrische Bauelemente mit aus der Isolierumhüllung herausstehenden Anschlußdrähte beispielsweise in der DE-AS 11 12 769 oder der DE-PS 11 47 321 beschrieben.

Elektrische Bauelemente, bei denen die vorliegende Erfindung anwendbar ist, sind in erster Linie elektrische Kondensatoren mit Kunststoff als Dielektrikum, beispielsweise Schichtkondendatoren gemäß den US-PSen 4 563 724 und 4 635 164, bei denen die Belegungen entgegengesetzter Polarität alternierend von Lage zu Lage in durch einen Einschnitt voneinander getrennten Vorsprüngen an einer Seite enden. Andere Schichtkondensatoren, auf die die vorliegende Erfindung ebenfalls anwendbar ist, sind in den US-PSen 3 670 378 und 3 728 765 beschrieben. Bei diesen Schichtkondensatoren enden die Belegungen entgegengesetzter Polarität alternierend von Schicht zu Schicht an gegenüberliegenden Schmalseiten des Schichtstapels. In beiden Fällen sind die alternierend endenden Belegungen durch innere Stromzuführungen miteinander elektrisch leitend verbunden, die aus insbesondere aufgeschoopten Metallschichten vornehmlich aus Aluminium und darauf aufgespritztem Weißmetall bestehen.

Die Erfindung ist ferner anwendbar bei elektrischen Wickelkondensatoren, die entweder, wie hinreichend bekannt, an beiden Stirnseiten Metallschichten als innere Stromzuführungen aufweisen, die aufgeschoopt sind und die Belegungen entgegengesetzter Polarität miteinander elektrisch verbinden. Es kommen auch Wickelkondensatoren in Frage, wie sie beispielsweise in der US-PS 4 639 832 beschrieben sind.

Die Erfindung ist zwar mit besonderem Vorteil auf die eben beschriebenen elektrischen Kondensatoren anwendbar, jedoch schließt dies nicht aus, daß auch andere elektrische Bauelemente in Frage kommen, sofern sie einen elektrisch aktiven Körper mit voneinander getrennt und möglichst einander gegenüberliegenden Stromzuführungen aufweisen. Als solche Bauelemente kommen elektrische Widerstände mit einem von der anliegenden Spannung abhängigen Widerstandswert (Varistoren), ferner Widerstände mit von der Temperatur abhängigem Widerstandswert (Kaltleiter = PTC-Widerstand oder Heißleiter = NTC-Widerstand), elektrische Kondensatoren mit keramischen Dielektrikum, insbesondere als Vielschichtkondensatoren, oder induktive Bauelemente in Frage.

Elektrische Bauelemente in Chip-Bauweise weisen keine von der Isolierumhüllung abstehenden äußeren Anschlußelemente, wie z.B. Stromzuführungsdrähte oder Stromzuführungsbänder, auf, sondern die Isolierumhüllung ist so ausgestattet, daß an ihrer Oberfläche zumindest an der der Isolierstoffplatte, mit der die Bauelemente elektrisch und mechanisch verbunden werden sollen, zugewandten Seite flächenhafte Anschlußelemente vorhanden sind, deren Abstand voneinander dem festgelegten Rastermaß (meist ein ganzzahliges Vielfaches von 2,5 mm) entspricht.

Beim Befestigen der elektrischen Bauelemente in Chip-Bauweise an den Isolierstoffplatten gedruckter Schaltungen ist zunächst eine vorübergehende Befestigung erforderlich, die in aller Regel durch einen kleinen Klebstofftropfen bewirkt wird. Danach erfolgt eine Verlötung, bei dem Probleme auftreten, die u.a. darin bestehen, daß bei dem für diese Zwecke notwendigen Tauch-Lötvorgang, meist ein sogenannter Schwallötvorgang, die elektrischen Bauelemente mit dem flüssigen, über seine Schmelztemperatur erhitzten Lot zwangsläufig in Berührung kommen oder anderweitig hoch erhitzt werden. Es ist deshalb erforderlich, sowohl die Bauelemente als auch die Anschlußelemente derselben so auszugestalten, daß sie diese Temperaturen, meist um oder über 250° C, wenigstens kurzzeitig aushalten, ohne Veränderung der elektrischen, dielektrischen oder mechanischen Eigenschaften zu erleiden.

Die bekannten elektrischen Bauelemente in Chip-Bauweise, für die eingangs beispielsweise Literaturstellen angegeben sind, weisen in aller Regel eine Isolierumhüllung auf, die nur aus einer durch Umspritzen oder Vergießen hergestellten einzigen Schicht bestehen.

Die Herstellung derartiger Isolierumhüllungen bereitet dann Schwierigkeiten, wenn es darum geht, sehr große Stückzahlen, meist weit über 1 Million Stück pro Tag, zu bewältigen. Für derartige Massenfertigungen ist höchstmögliche Rationalisierung erforderlich.

Die Durchführung der in den eingangs genannten Literaturstellen beschriebenen Verfahren und das Ergebnis derselben, nämlich die elektrischen Bauelemente mit Isolierumhüllung, sind für die Herstellung von elektrischen Bauelementen in Chip-Bauweise insbesondere bei Massenfertigung, wenig geeignet.

Dies gilt insbesondere dann, wenn es sich um besonders kleine Bauelemente handelt mit Abmessungen Länge L von 2 bis 10 mm x x Breite B von 1,25 bis 7,5 mm x Dicke D von 0,7 bis 5 mm.

Derartige Bauelemente mit äußeren elektrischen Anschlüssen zu versehen, bereitet insofern Schwierigkeiten, als das Bauelement während des Aufbringens der elektrischen Anschlüsse einerseits sicher gehalten werden muß, andererseits aber durch diese Halterung kein Teil des Bauelementes so abgedeckt werden darf, daß ein Aufbringen des Anschlusses unmöglich ist.

Es kommt hinzu, daß die z.B. in der bereits genannten US-PS 4 617 609 beschriebenen Löt- oder Schweißvorgänge beim Verbinden der äußeren Anschlußelemente mit den inneren Stromzuführungen weitere Schwierigkeiten bereiten, weil nicht nur die Kleinheit der elektrischen Bauelemente eine Rolle spielt, sondern auch die thermische Belastung der inneren Stromzuführungen zu Fehlkontaktierungen oder sogar zu Änderungen der elektrischen und dielektrischen Eigenschaften der Bauelemente führen kann.

Die SMD-Technologie (Surface-Mounted-Devices) macht ferner im Zuge der dortigen Miniaturisierung es erforderlich, daß künftig nur sehr kleine Flächen der inneren Stromzuführungen für die Kontaktierung zur Verfügung stehen, z.B. 1 mm x 1,5 mm.

Aufgabe der vorliegenden Erfindung ist es, elektrische Bauelemente in Chip-Bauweise und ein Verfahren zu ihrer Herstellung anzugeben, deren äußere elektrische Anschlußelemente mit den inneren Stromzuführungen nicht mehr zwingend verlötet oder verschweißt sind, deren Herstellung materialsparende und rationelle Verfahren ermöglichen und insbesondere besonders kleine elektrische Bauelemente verwendet werden können, wobei die Möglichkeit resultiert, hauptsächlich bei elektrischen Kondensatoren die obere lötfähige Weißmetallschicht (Sn/Pb-Lot) weglassen zu können.

Zur Lösung dieser Aufgabe ist das elektrische Bauelement in Chip-Bauweise der eingangs angegebenen erfindungsgemäßen Art gekennzeichnet durch die Merkmale

a) die Isolierumhüllung besteht aus einem Rahmen aus Isolierstoff, der eine Ausnehmung umgibt, in der sich das Bauelement befindet und von ausgehärtetem Gießharz umschlossen ist, und aus wenigsten einer Kunststoffolie, die die Ausnehmung nach außen hin verschließt,

b) der Rahmen, das ausgehärtete Gießharz und die Kunststoffolie bestehen aus elektrisch isolierendem und den beim Löten, insbesondere beim Schwallöten, auftretendem Temperaturen widerstehendem Kunststoff,

c) die Kunststoffolie und das ausgehärtete Gießharz sind an einander gegenüberliegenden Stellen von den Öffnungen durchbrochen, deren Tiefe bis zu den inneren Stromzuführungen oder in die inneren Stromzuführungen hineinreicht,

d) die äußeren Anschlußelemente bestehen aus Metallschichten, die sich jeweils auf der Kunststoffolie, auf den Innenwandungen der Öffnungen auf den durch diese freigegebenen Teilen der Stromzuführungen, und auf rechtwinklig an die Kunststofffolie angrenzenden Oberflächenteilen des Rahmens befinden, wo sie voneinander durch einen Isolierabstand getrennt sind.

Die Unteransprüche zum Gegenstandsanspruch geben bevorzugte Ausführungsformen an.

So besteht der Rahmen vorzugsweise aus Epoxidharz, Polyphenylensulfid (PPS) oder Polyimid, alles im Handel befindliche polymere Kunststoffe mit und ohne Füllstoffen, die für den Einsatz bei höheren Temperaturen, wie dies hier in Frage kommt, geeignet sind.

Gleiches gilt für das ausgehärtete Gießharz, das vorzugsweise aus Epoxidharz besteht.

Die Kunststoffolien bestehen vorteilhafterweise aus Epoxidharz, gefülltem Phenolharz, Polyhenylensulfid (PPS) oder Polyimid und weisen eine Dicke von 0,1 bis 1 mm auf.

Vorzugsweise werden die Öffnungen in der Isolierumhüllung durch Bohren, Fräsen oder Abtrag mit Laser hergestellt, weil diese nungen beträgt 0,1 bis 2 mm.

Gemäß der vorliegenden Erfindung ist es besonders vorteilhaft, wenn die inneren Stromzuführungen aus Aluminium oder aus Zink bestehen und anstelle der lötfähigen Weißmetallschicht eine Auflage aus Kupfer als oberste Schicht enthalten, weil Kupfer durch galvanische Verfahren besonders einfach und auch schon bei geringer Fläche besonders gut mit der Metallschicht der äußeren Anschußelemente verbunden werden kann.

Bei diesem Aufbau kann die Gesamtdicke der Schoopschicht sehr dünn sein, z.B. gleich oder kleiner 0,2 mm.

Die die äußeren Anschlußelemente darstellenden Metallschichten bestehen aus galvanisch aufgetragenen Metallen mit Paladium als Grundschicht, Nickel als Schutzschicht, um Ablegieren durch Legierungsbildung zu vermeiden, und Zink-Blei als lötfähige obere Schicht.

Es ist auch möglich, daß die die äußeren Anschlußelemente darstellende Metallschichten aus aufgespritztem Metall, beispielsweise nach den bekannten Schoopverfahren oder dem bekannten Metallsputtern, hergestellt sind. Im Schoopverfahren lassen sich in besonders einfacher Weise Schichten aus Weißmetall (z.B. Sn/Pb-Legierung) herstellen.

Soll die Metallschicht aufgesputtert werden, dann bietet sich hierfür eine Schichtfolge von Aluminium als Grundmetall, Nickel als Schutzschicht gegen Ablegieren und einer sehr dünnen Paladiumschicht zur Sicherung der Lötfähigkeit an.

Die Ausnehmung im Rahmen der Isolierstoffumhüllung kann an gegenüberliegenden Seiten desselben offen sein, so daß in diesem Falle zwei Abdeckfolien, nämlich auf jeder Seite des Rahmens eine, vorhanden sind.

Es ist aber auch möglich, daß die Ausnehmung im Rahmen 3 nur einseitig offen ist, so daß dann nur eine Abdeckfolie erforderlich ist und die Öffnungen dann auf der geschlossenen Seite durch die Metallschicht und diesen Rahmenteil und auf der gegenüberliegenden Seite durch die Metallschicht und das ausgehärtete Gießharz hindurch bis zu den oder in die inneren Stromzuführungen reichen.

Der Querschnitt der Ausnehmungen im Rahmen der Isolierumhüllung ist möglichst dem Querschnitt des Bauelementes angepaßt, das bedeutet, daß bei einem Bauelement mit rechteckigem Querschnitt, wie es Schichtkondensatoren in aller Regel sind, aber auch bei flachgepreßten Wickelkondensatoren, der Querschnitt rechteckig ist. Bei Wickelkondensatoren mit rundem oder ovalem Querschnitt ist der Querschnitt der Ausnehmungen der Form angepaßt.

Das Verfahren zur Herstellung von Bauelementen nach der Erfindung das die eingangs angegebenen Merkmale aufweist, ist zur Lösung der Aufgabe erfindungsgemäß gekennzeichnet durch die Verfahrensschritte

a) als Form wird eine Kunststoffplatte eingesetzt, deren Dicke geringfügig stärker ist als die Breite der elektrischen Bauelemente und die mit Ausnehmungen versehen ist, die zu der Oberseite und/oder zu der Unterseite der Kunststoffplatte offen sind, dem Querschnitt der elektrischen Bauelemente entsprechen und im Hinblick auf Justiermarkierungen, die an der Kunststoffplatte angebracht sind, in Längsrichtung und in Querrichtung sich an bestimmten Stellen befinden,

b) die elektrischen Bauelemente werden einzeln in je eine Ausnehmung der Kunststoffplatte derart eingesetzt, daß die inneren elektrischen Stromzuführungen je Pol zur Oberseite und zur Unterseite der Kunststoffplatte gerichtet sind,

c) anschließend werden die Ausnehmungen mit wenigstens einer Kunststoffolie verschlossen und dadurch die elektrischen Bauelemente in den Ausnehmungen gehalten,

d) der verbleibende Hohlraum zwischen den elektrischen Bauelementen und den Wänden der Ausnehmung sowie der Kunststoffolie werden danach vollständig mit aushärtbarem Gießharz gefüllt,

e) nach dem Aushärten des Gießharzes werden mindestens teilweise die inneren elektrischen Stromzuführungen eines jeden Bauelementes sowohl auf der Oberseite als auch auf der Unterseite der Kunststoffplatte unter Ausnutzung der Justiermarkierungen freigelegt, indem das ausgehärtete Gießharz und die Kunststoffolien mit Öffnungen versehen werden, deren Tiefe bis zu den inneren Stromzuführungen oder in die inneren Stromzuführungen hineinreicht,

f) auf die Innenwandungen der Öffnungen und wenigstens auf angrenzende Teilbereiche der Kunststoffolie werden danach Metallschichten aufgebracht,

g) die Kunststoffplatte wird danach längs von Trennlinien in Längsrichtung und in Querrichtung in die einzelnen mit einer Isolierumhüllung versehenen elektrischen Bauelemente zerteilt.

Dieses Verfahren bietet den Vorteil, daß ein sehr hoher Grad der Rationalisierung der Fertigung möglich ist, denn bei einer Größe der Kunststoffplatte von 10 x 15 cm und bei Abmessungen der elektrischen Bauelemente, insbesondere der Kondensatoren (L x B x D) von 5 mm x 3 mm x 2 mm können je Platte bis zu 1000 Kondensatoren gleichzeitig behandelt werden.

Die mit elektrischen Bauelementen versehenen, mit aushärtbarem Gießharz gefüllten Kunststoffplatten können vorzugsweise nach dem Aushärten des Gießharzes einer Temperaturbehandlung (Temperung) bei einer Temperatur zwischen 210 und 250° C für eine Zeit von 1 bis 65 Stunden mit kurzen Temperzeiten bei höheren Temperaturen und umgekehrt unterworfen werden, wie dies beispielsweise in der US-PS 4 622 620 ausführlich beschrieben ist. Diese Temperung dient dazu, die mechanischen und insbesondere die elektrischen Eigenschaften des elektrischen Bauelementes und seiner Isolierumhüllung zu stabilisieren, damit beim späteren Lötvorgang das Bauelement keine weiteren Änderungen mehr erfährt, denn durch die bei der Temperung eintretenden Erhöhung des Kristallisationsgrades der Kunststoffe auf insbesondere mehr als 50 % halten die Bauelemente kurzzeitig sogar Temperaturen aus, die oberhalb der Erweichungs- bzw. Schmelztemperatur der Kunststoffe liegen.

Ferner können mehrere mit Bauelementen gefüllte Kunststoffplatten zu einem Block zusammengefaßt werden, gemeinsam als Block mit Gießharz zum Ausfüllen der Hohlräume und zum Aushärten desselben behandelt werden, wonach die oben beschriebene Temperaturbehandlung ebenfalls im Block vorgenommen werden kann.

Durch die Zusammenfassung mehrerer gefüllter Kunststoffplatten zu einem Block, wobei bis zu 40 Platten vereinigt werden können, kann mit besonderem Vorteil das aushärtbare Gießharz durch Unterdruck im inneren des Blockes und Überdruck von außen besonders blasenfrei in die Hohlräume zwischen dem Bauelement und den Wandungen der Ausnehmung eindringen.

Die Ausnehmungen können untereinander dabei mit Vorteil durch an der Oberseite und/oder an der Unterseite der Kunststoffplatte vorhandene Gießkanäle verbunden werden, durch die insbesondere beim Vergießen mit aushärtbarem Kunstharz im Block mehrerer gefüllter Kunststoffplatten das aushärtbare Gießharz in die Ausnehmungen unter erhöhtem Druck eingepreßt werden kann.

Spätestens vor dem Aufbringen der Metallschichten wird die Kunststoffplatte auf der Oberseite und auf der Unterseite mit parallel zueinander verlaufenden Rinnen mit senkrechten Wänden versehen, die in der Mitte zwischen jeweils zwei Reihen von Ausnehmungen verlaufen und auf der Oberseite und auf der Unterseite der Kunststoffplatte einander gegenüberstehen, wonach das Zerteilen der Trägerplatte gemäß Verfahrensschritt g) in der Mitte der Rinne erfolgt und dann in die sich ergebenden Teile wenigstens eine Nut eingefräst wird, die gleichzeitig den Isolationsabstand zwischen den äußeren Anschlußelementen bestimmen.

Auf diese Weise wird erreicht, daß die auf rechtwinklig an den als Decklagen wirkenden Kunststoffolien angrenzenden Oberflächenteilen des Rahmens erforderlichen Metallschichten der äußeren Anschlußelemente für die spätere Kontaktierung mit der gedruckten Schaltung in einem Arbeitsgang vorgenommen werden kann, während ohne diese Maßnahme diese Metallflächen durch einen gesonderten Arbeitsgang angebracht werden müssen.

Insgesamt bestehen die mit der Erfindung erzielten Vorteile darin, daß nicht mehr jedes einzelne elektrische Bauelement umspritzt oder umgossen werden muß, um eine Isolierumhüllung zu erhalten, sondern daß viele Bauelemente gleichzeitig ein Gehäuse erhalten, auf das die zur Kontaktierung dienenden Metallschichten ohne die Verwendung irgendwelcher Masken bei nur geringem Materialverlust und ohne aufwendige Halterung aufgebracht werden. Durch den mehrschichtigen Aufbau der Isolierumhüllung (Rahmen, ausgehärtetes Gießharz, Isolierstoffolien oder gegebenenfalls auch nur Metallfolien) wird eine besonders hohe Feuchtedichtigkeit erzielt. Die universelle Anwendbarkeit der Erfindung bei unterschiedlichsten Bauelementen, insbesondere wenn diese sehr geringe Abmessungen aufweisen, stellt einen weiteren besonderen Vorteil dar.

Die Erfindung wird nachfolgend anhand der beigefügten Figuren näher erläutert.

Es zeigen:

FIG 1     ein elektrisches Bauelement, perspektivisch und im Schnitt,

FIG 2     ein elektrisches Bauelement, ebenfalls perspektivisch und im Schnitt, jedoch mit einer anderen Form der Isolierumhüllung,

FIG 3     ein anderes elektrisches Bauelement, perspektivisch und im Schnitt,

FIG 4     schematisch eine für das Verfahren nach der Erfindung verwendbare Kunststoffplatte vor dem Herstellen der Öffnungen,

FIG 5     einen Ausschnitt aus einer fertig verarbeiteten Kunststoffplatte vor dem Auftrennen in Einzelteile,

FIG 6     einen Ausschnitt einer anderen Ausführungsform der fertig verarbeiteten Kunststoffplatte.

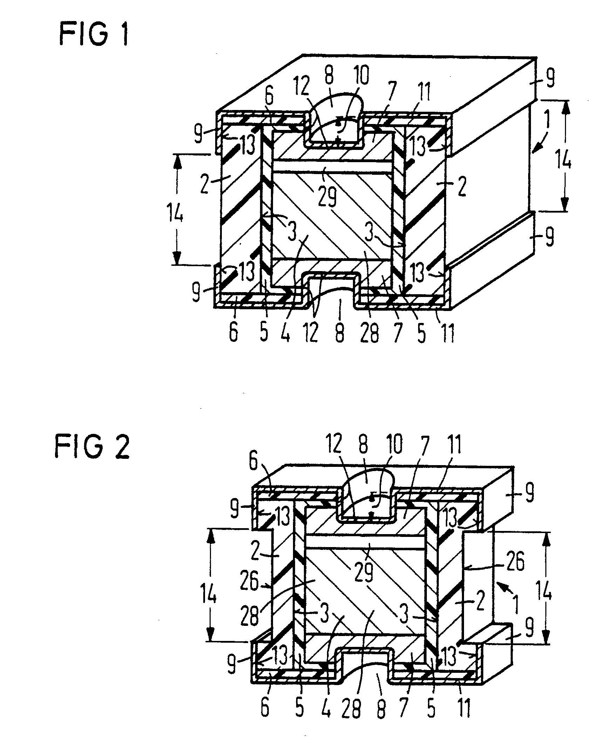

In FIG 1 ist mit 1 die Isolierumhüllung bezeichnet, die aus dem Rahmen 2 aus Isolierstoff mit der Ausnehmung 3, dem ausgehärtetem Gießharz 5 und den beidseitig vorhandenen Kunststoffolien 6 besteht. Die Ausnehmung 3 ist vom Rahmen 2 umgeben und enthält das elektrische Bauelement 4 mit seinen inneren Stromzuführungen 7.

Aus FIG 1 geht hervor, daß es sich bei dem elektrischen Bauelement um einen Schichtkondensator handelt, dessen im Schnitt sichtbare Belegung 28 zu der unteren inneren Stromzuführung 7 reicht, während die Belegung 28 von der oberen inneren Stromzuführung 7 durch den Isolierstreifen 29 getrennt ist. Dieser Schichtkondensator ist beispielsweise in der bereits genannten US-PS 4 617 609 beschrieben.

Oberhalb der beiden Kunststoffolien 6 sind als äußere Anschlußelemente 9 Metallschichten 11 aufgebracht, die sich auch auf der Innenwandung 12 der Öffnung 8 befinden und damit einen elektrischen Kontakt zu den inneren Stromzuführungen 7 ergeben, weil die Tiefe 10 der Öffnung 8 so bemessen ist, daß sie im vorliegenden Fall bis in die innere Stromzuführungen 7 hineinreicht.

Die Metallschicht 11 reicht um die Kante des Rahmens 2 rechtwinklig herum bis auf Oberflächenteile 13 des Rahmens 2. Dort befinden sich die eigentlichen äußeren Anschlußelemente 9, die mit den Kontaktierungsstellen der gedruckten Leitungsplatte zu verbinden sind. Zwischen den äußeren Anschlußelementen 9 besteht ein Isolationsabstand 14.

Die auf die Oberflächenteile 13 des Rahmens 2 reichenden Teile der Metallschicht 11, die die äußeren Anschlußelemente 9 bilden, werden auf eine später bei der Schilderung des Verfahrens beschriebenen Weise hergestellt.

In FIG 2 sind für gleiche Teile gleiche Bezugszeichen wie in FIG 1 verwendet. Die Ausführungsform nach FIG 2 unterscheidet sich von der Ausführungsform nach FIG 1 einerseits dadurch, daß ein Bauelement geringerer Dicke eingesetzt ist, was durch die kürzere Perspektive zum Ausdruck kommt. Andererseits besteht ein wesentlicher Unterschied darin, daß der Isolationsabstand 14 zwischen den äußeren Anschlußelementen 9 durch in die Rahmenteile 2 eingebrachte Nuten 26 gebildet ist. Die Herstellung dieser Nuten wird später bei der Schilderung des entsprechenden Verfahrens beschrieben.

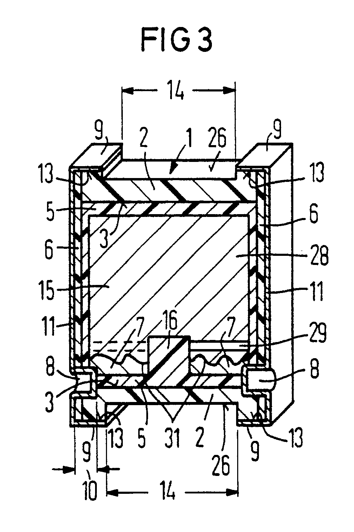

In FIG 3, in der ebenfalls gleiche Teile mit gleichen Bezugszeichen versehen sind, ist eine Ausführungsform gezeigt, bei der als elektrisches Bauelement 15 ein Schichtkondensator vorhanden ist, dessen innere Stromzuführungen 7 zu einer Seite geführt sind, wo sie durch einen Einschnitt 16 voneinander getrennt sind. Solche Kondensatoren sind in den bereits erwähnten US-PSen 4 563 724 und 4 635 164 beschrieben. In der zuletzt genannten Patentschrift ist auch die Bedeutung der Wellenschnittkante 31 erläutert. Diese Wellenschnittkante dient für eine bessere Verbindung der inneren Stromzuführungen 7 mit den auf den Dielektrikumsfolien befindlichen Belegungen, von denen in der FIG 3 die Belegung 28 zu sehen ist, die rechts vom Einschnitt 16 durch den Isolierstreifen 29 von der inneren Stromzuführung 7 getrennt ist, während die darunterliegende Belegung durch den links vom Einschnitt 16 gestrichelt dargestellten Isolierstreifen von der inneren Stromzuführung 7 getrennt ist.

Man erkennt aus FIG 3, daß insbesondere Schichtkondensatoren mit Einschnitt 16 besonders vorteilhaft als mit einer Isolierumhüllung versehene elektrische Bauelemente hergestellt werden können.

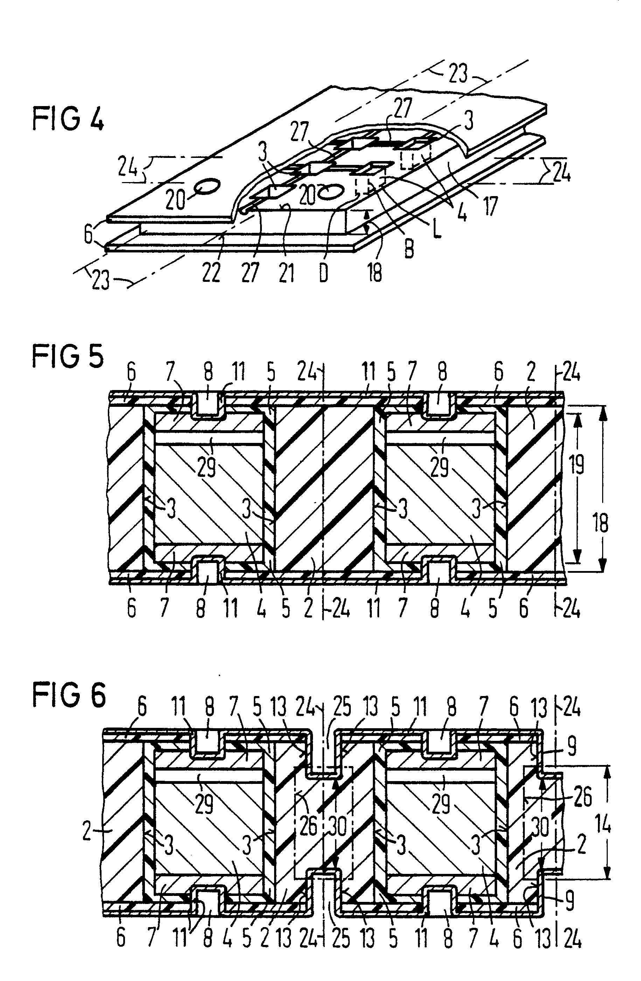

Die FIG 4, 5 und 6 dienen zur Erläuterung des Verfahrens nach der vorliegenden Erfindung. In FIG 4 ist eine Kunststoffplatte 17 gezeigt, die mit Justiermarkierungen 20 versehen ist. Unter Berücksichtigung dieser Justiermarkierungen 20 sind regelmäßig über die gesamte Platte 17 verteilt Ausnehmungen 3 vorhanden, die entweder nur zur Oberseite 21 oder auch zur Unterseite 22 der Trägerplatte 17 offen sind.

An der Oberseite 21 sind die Ausnehmungen 3 durch Gießkanäle 27 miteinander verbunden.

In die Ausnehmungen 3 werden elektrische Bauelemente 4 eingesetzt, von denen zwei solcher Bauelemente in zwei Ausnehmungen 3 in FIG 4 gezeigt sind. Es empfiehlt sich, die elektrischen Bauelemente 4 so in die Ausnehmungen 3 einzulegen, daß die Breite B (oder die Breite 19 in FIG 5) in Richtung der Dicke 18 der Isolierstoffplatte 17 verläuft und das elektrische Bauelement somit gewissermaßen mit seiner Schmalseite in die Ausnehmung 3 eingeführt wird. Dies gilt für Schichtkondensatoren nach den FIG 1 und 2, sofern die inneren Stromzuführungen 7 sich auf diesen Schmalseiten befinden. Derartige elektrische Bauelemente, bei denen sich die inneren Stromzuführungen 7 an gegenüberliegenden Seitenflächen befinden, sind somit generell derart in die Ausnehmungen 3 der Kunststoffplatte 17 einzusetzen, daß ein Pol des elektrischen Bauelementes 4 zur Oberseite 21 und der andere Pol des elektrischen Bauelementes zur Unterseite 22 der Isolierstoffplatte 17 gerichtet sind.

Bei elektrischen Bauelementen gemäß FIG 3 ist es ebenfalls erforderlich, die elektrischen Bauelemente derart einzulegen, daß der eine Pol, dargestellt durch eine innere Stromzuführung 7, zu einer Seite der Trägerplatte 17 und der andere Pol, dargestellt durch die andere innere Stromzuführung 7, zur gegenüberliegenden Seite der Isolierstoffplatte 17 gerichtet sind, wie dies in FIG 3 deutlich dargestellt ist.

Nachdem die Ausnehmungen 3 mit elektrischen Bauelementen 4 oder 15 in der geschilderten Weise gefüllt sind, werden die Ausnehmungen 3 durch eine Kunststoffolie 6, wenn die Ausnehmungen 3 einseitig offen sind, oder bei beiderseitiger Öffnung durch zwei Kunststoffolien 6 zu beiden Seiten der Isolierstoffplatte 17 verschlossen. In dieser Form erfolgt das Vergießen mit Gießharz, das Aushärten des Gießharzes und der gegebenenfalls weiter oben beschriebene Temperungsvorgang.

Als Material für die Kunststoffplatte 17, für das Gießharz 5 und die Kunststoffolien 6 eignen sich die oben beschriebenen Materialien. Die Dicke 18 der Kunststoffplatte 17 soll so bemessen sein, daß sie in etwa dem Abstand der beiden stirnseitigen Flächen der inneren Stromzuführungen 7 bzw. der Breite B bzw. 19 der Bauelemente 4 oder 15 entspricht, wobei ein geringes Übermaß zu empfehlen ist, weil dann herstellungsbedingte Breitentoleranzen der elektrischen Bauelemente ausgeglichen werden können. Die Ausnehmungen 3 können gebohrt (bei rundem Querschnitt) oder gestanzt werden. Bei Kunststoffplatten 17, die in Spritzgußtechnik hergestellt werden, werden die Ausnehmungen 3 bereits während des Spritzgießvorganges durch entsprechende Gestaltung der Werkzeuge erzeugt.

Es empfiehlt sich, Ausnehmungen 3, die zu beiden Seiten der Trägerplatte 17 offen sind, vor dem Füllen mit elektrischen Bauelementen einseitig mit einer Kunststoffolie 6 zu verschliessen.

Beim Vergießen mit Gießharz werden die Hohlräume, die sich zwischen den elektrischen Bauelementen 4 oder 15 und den Wänden der Ausnehmungen 3 sowie den Kunststoffolien 6 befinden, mit Gießharz vollständig ausgefüllt.

Dieser Gießvorgang kann sehr rational durchgeführt werden, weil sich in einer solchen Kunststoffplatte sehr viele elektrische Bauelemente befinden und darüberhinaus eine größere Zahl, beispielsweise 40, solcher wie beschrieben vorbereiteter Kunststoffplatten übereinander oder nebeneinander gestapelt und in dieser Form vergossen werden können.

Die Anwendung eines Vakuumvergusses (zunächst Evakuierung der Hohlräume, dann Einpressen des aushärtbaren Gießharzes unter Überdruck) garantiert Blasenfreiheit und sehr gute Haftung zwischen den Kunststoffolien 6, der Kunststoffplatte 4 und den elektrischen Bauelementen 4, 15. Die Gießkanäle 27 dienen dabei dazu, das Eindringen der flüssigen Gießharzmasse in die Ausnehmungen 3 zu beschleunigen.

Die elektrischen Bauelemente 4, 15 befinden sich nun in einer mechanischen Fixierung durch ausgehärtetes Gießharz 5 und durch den umgebenden Rahmen 2, der von der Kunststoffplatte 17 gebildet wird. In dieser kompakten Anordnung werden die elektrischen Bauelemente, insbesondere elektrische Kondensatoren, bei den oben näher beschriebenen hohen Temperaturen getempert. Die elektrischen Kondensatoren können sich in diesem Kompaktaufbau mechanisch nicht mehr verändern, d.h. der Temperungsvorgang bewirkt eine Stabilisierung der elektrischen Werte und darüberhinaus auch eine Stabilisierung der mechanischen Eigenschaften der Kunststoffteile der Isolierumhüllung 1. Nach diesem Temperungsvorgang, sofern ein solcher stattgefunden hat, wird der aus mehreren Kunststoffplatten bestehende Block wieder in die einzelnen Kunststoffplatten aufgeteilt.

Danach wird durch die dünnen Kunststoffolien 6 und die Gießharzschicht 5 hindurch unter Ausnutzung der Justiermarkierungen 20 von beiden Seiten 21 und 22 der Kunststoffplatte 17 her je Bauelement eine kleine Öffnung 8 gebohrt, gefräst oder mittels Laserenergie erzeugt. Die Öffnungen 8 sind hinsichtlich ihrer Tiefe 10 (vgl. Fig. 1, 2 und 3) derart bemessen, daß das Metall der inneren Stromzuführung 7 nach außen freigelegt wird, d.h. die Tiefe reicht bis zu der inneren Stromzuführung 7 oder in diese Stromzuführung hinein.

Bei einer Dicke der Kunststoffolien 6 von 0,3 mm ist z.B. eine Tiefe 10 der Öffnung 8 von 0,5 mm ausreichend. Der Durchmesser der Öffnung 8 kann zwischen 0,1 mm (bei Herstellung mittels Laserenergie) und bis zu 2 mm (bei gebohrten oder gefrästen Öffnungen) betragen.

Die Öffnungen 8 werden vorzugsweise mit einem Vielfachwerkzeug auf einem automatischen Bohr- oder Fräswerk vollzogen, wobei die mit exaktem geometrischen Bezug zur Lage der elektrischen Bauelemente sich befindenden Justiermarkierungen 20 der Kunststoffplatte 17 ausgenutzt werden. Bei Anwendung eines Laserstrahles zur Herstellung der Öffnungen kann ein einzelner oder mehrfach geteilter Laserstrahl schrittweise an die jeweiligen Stellen geleitet werden, wobei äußerst geringe Taktzeiten eingehalten werden können.

Nach der Herstellung der Öffnungen 8 werden die mit den elektrischen Bauelementen 4, 15 versehenen Isolierstoffplatten 17 unter Anwendung bekannter Metallisierungsverfahren, die auch bei der Herstellung gedruckter Schaltungen zum Einsatz kommen mit einer lötfähigen Metallschicht 11 beidseitig ganzflächig versehen. Hierfür wird z.B. eine Schichtfolge aus einer sehr dünn aufgetragenen Paladiumhaftschicht, gegebenenfalls unter Verwendung von Keimen aus zweiwertigem Zinn, einer dickeren Nickelschicht, die gegen das Ablegieren schützt, und einer äußeren Zink-Blei-Schicht, die lötfähig ist, aufgebracht. Alle diese Schichten werden auf galvanischem Wege abgeschieden, wobei auch die Innenwandung 12 der Öffnung 8 mit dieser Metallschicht 11 versehen wird.

Auf diese Weise wird die innere Stromzuführung 7 mit einer gut leitenden, mechanisch stabilen Metallschicht 11 verbunden. Weder bei der Herstellung der Öffnungen 8 noch bei dem nachträglich stattfindenden galvanischen Abscheidungsverfahren wird die innere Stromzuführung mechanisch oder thermisch belastet.

Es sind natürlich auch andere Möglichkeiten zur Herstellung der elektrischen Verbindung zwischen der inneren Stromzuführung und der äußeren Metallschicht möglich, die oben bereits beschrieben sind und die darin bestehen, daß über die Kunststofffolien 6 oder anstelle derselben Metallfolien zum Verschließen der Ausnehmungen 3 verwendet werden, wobei die elektrische Verbindung zwischen einer solchen Metallfolie und der inneren Stromzuführung entweder durch Löten oder durch Metallspritzverfahren erfolgt.

Bei der Herstellung der Metallschicht 11 auf galvanischem Wege empfiehlt es sich, insbesondere bei elektrischen Kondensatoren, die innere Stromzuführung aus einer Aluminiumgrundschicht, die die Aluminiumbelegungen des Kondensators miteinander verbindet, und einer darauf abgeschiedenen sehr dünnen Kupferschicht aufzubauen, weil Kupfer auf galvanischem Wege auch als sehr dünne Schicht in der Öffnung 8 bereits zu einer sicheren Kontaktierung mit der Metallschicht 11 führt.

Nach der Herstellung der Metallschicht 11 wird die derart vorbehandelte Kunststoffplatte 17 längs den in FIG 4 dargestellten Trennlinien, nämlich Trennlinie 23 in Längsrichtung und Trennlinie 24 in Querrichtung, in Einzelteile aufgeteilt. Dies geschieht beispielsweise durch Anwendung einer Säge oder durch Anwendung entsprechend wirkender Trennvorrichtungen (Messer, Laserstrahl).

Es liegen dann einzelne Bauelemente vor, wie sie in FIG 5 dargestellt sind, wenn auch noch längs der Trennlinien 24 aufgeteilt ist.

Die Metallschicht 11 reicht dann bis zum Trennschnitt, so daß auf die durch den Trennschnitt gebildete Oberfläche noch die äußeren Anschlußelemente 9 aufgetragen werden müssen, wie dies in FIG 1 dargestellt ist. Dies geschieht beispielsweise dadurch, daß zunächst die Kunststoffplatte 17 in Richtung einer der Trennlinien 23 oder 24 in einzelne Stäbe aufgeteilt wird, die dann einem entweder galvanischen Metallisierungsprozeß oder einem Metallspritzverfahren unter Anwendung einer Schablone an den entsprechenden Seiten metallisiert werden, wobei ein Abstand zwischen gegenüberliegenden Metallschichten erzeugt wird, der dem Isolierabstand 14 entsprechen muß.

Ein anderer und für den vorliegenden Fall günstigerer Weg besteht darin, daß die Kunststoffplatte 17 spätestens vor dem Aufbringen der Metallschicht 11 auf der Oberseite 21 und auf der Unterseite 22 mit parallel zueinander verlaufenden Rinnen 25 (FIG 6) mit senkrechten Wänden versehen wird, die in der Mitte zwischen jeweils zwei Reihen von Ausnehmungen 3 verlaufen und auf der Oberseite 22 und auf der Unterseite 23 der Kunststoffplatte 17 einander gegenüberstehen. Das Zerteilen der Trägerplatte 17 erfolgt dann nach dem Auftragen der Metallschicht 11 längs der Trennlinie 24.

Sodann werden in die sich ergebenden Schnittebenen die Nuten 26 hineingefräst, deren Breite so bemessen ist, daß der Isolationsabstand 14 gewahrt wird.

Der Abstand zwischen den Bodenflächen der Rinnen 25 ist somit so zu bemessen, daß er kleiner ist als der später erforderliche Isolationsabstand 14.

Auf diese Weise resultieren mit Isolierumhüllung versehene elektrische Bauelemente, wie sie in den FIG 2 und 3 gezeigt sind.

## Patentansprüche

1. Elektrisches Bauelement in Chip-Bauweise, das mit einer Isolierumhüllung (1) versehen ist, sowie innere elektrisch leitende Stromzuführungen (7) und damit durch Öffnungen (8) in der Isolierumhüllung (1) elektrisch verbundene äußere Anschlußelemente (9) aufweist, gekennzeichnet durch die Merkmale

    a) die Isolierumhüllung (1) besteht aus einem Rahmen (2) aus Isolierstoff, der eine Ausnehmung (3) umgibt, in der sich das Bauelement (4, 15) befindet und von ausgehärtetem Gießharz (5) umschlossen ist, und aus wenigstens einer Kunststoffolie (6), die die Ausnehmung (3) nach außen hin verschließt,

    b) der Rahmen (2), das ausgehärtete Gießharz (5) und die Kunststoffolie (6) bestehen aus elektrisch isolierendem und den beim Löten, insbesondere beim Schwallöten, auftretenden Temperaturen widerstehendem Kunststoff,

    c) die Kunststoffolie (6) und das ausgehärtete Gießharz (5) sind an einander gegenüberliegenden Stellen von den Öffnungen (8) durchbrochen, deren Tiefe (10) bis zu den inneren Stromzuführungen (7) oder in die inneren Stromzuführungen (7) hineinreicht,

    d) die äußeren Anschlußelemente (9) bestehen aus Metallschichten (11), die sich jeweils auf der Kunststoffolie (6), auf den Innenwandungen (12) der Öffnungen (8), auf den durch diese freigegebenen Teilen der Stromzuführungen (7), und auf rechtwinklig an die Kunststoffolie angrenzenden Oberflächenteilen (13) des Rahmens (2) befinden, wo sie voneinander durch einen Isolierabstand (14) getrennt sind.

2. Elektrisches Bauelement nach Anspruch 1, dadurch gekennzeichnet, daß der Rahmen (2) aus Epoxidharz, Polyphenylensulfid (PPS) oder Polyimid besteht.

3. Elektrisches Bauelement nach Anspruch 1, dadurch gekennzeichnet, daß das ausgehärtete Gießharz (5) aus Epoxidharz besteht.

4. Elektrisches Bauelement nach Anspruch 1, dadurch gekennzeichnet, daß Kunststoffolien (6) aus Epoxidharz, gefülltem Phenolharz, Polyphenylsulfid (PPS) oder Polyimid bestehen und eine Dicke von 0,1 bis 1 mm aufweisen.

5. Elektrisches Bauelement nach Anspruch 1, dadurch gekennzeichnet, daß die Öffnungen (8) durch Bohren, Fräsen oder Abtrag mit Laser hergestellt sind und einen Durchmesser von 0,1 bis 2 mm aufweisen.

6. Elektrisches Bauelement nach Anspruch 1, dadurch gekennzeichnet, daß die inneren Stromzuführungen (7) aus Aluminium (Al) oder Zink (Zn) und Kupfer (Cu) als oberste Schicht bestehen.

7. Elektrisches Bauelement nach Anspruch 1, dadurch gekennzeichnet, daß die die äußeren Anschlußelemente (9) darstellenden Metallschichten (11) aus galvanisch aufgetragenen Metallen bestehen mit Paladium (Pd) als Grundschicht, Nickel (Ni) als Schutzschicht und Zinn-Blei (Sn-Pb) als lötfähige Schicht.

8. Elektrisches Bauelement nach Anspruch 1, **dadurch gekennzeichnet,** daß die die äußeren Anschlußelemente (9) darstellenden Metallschichten (11) aus aufgespritztem Metall (Schoopverfahren, Metallsputtern) bestehen.

9. Elektrisches Bauelement nach Anspruch 8, **dadurch gekennzeichnet,** daß die Metallschicht (11) aus aufgeschooptem Weißmetall (z.B. Sn/Pb-Legierung) besteht.

10. Elektrisches Bauelement nach Anspruch 8, **dadurch gekennzeichnet,** daß die Metallschicht (11) aus einer Schichtfolge von Aluminium (Al) als Grundmetall, Nickel (Ni) als Schutzschicht und einer sehr dünnen Paladiumschicht (Pd) zur Sicherung der Lötfähigkeit besteht und diese Schichtfolge ausgesputtert ist.

11. Elektrisches Bauelement nach Anspruch 1, **dadurch gekennzeichnet,** daß der Querschnitt der Ausnehmung (3) im Rahmen (2) im Querschnitt des Bauelementes (4, 15) angepaßt ist.

12. Verfahren zum Herstellen eines elektrischen Bauelementes nach einem der Ansprüche 1 bis 11, bei dem mehrere elektrische Bauelemente je einzeln in Ausnehmungen einer Form eingesetzt, mit aushärtbarem Gießharz vergossen und nach dem Aushärten die Form zusammen mit dem ausgehärteten Gießharz in Einzelstücke zerteilt wird, die je ein mit einer Isolierumhüllung versehenes elektrisches Bauelement darstellen, **gekennzeichnet** durch die Verfahrensschritte

a) als Form wird eine Kunststoffplatte (17) eingesetzt, deren Dicke (18) geringfügig stärker ist als die Breite (19) der elektrischen Bauelemente (4, 15) und die mit Ausnehmungen (3) versehen ist, die zu der Oberseite (21) und/oder zu der Unterseite (22) der Kunststoffplatte (17) offen sind, dem Querschnitt der elektrischen Bauelemente (4, 15) entsprechen und im Hinblick auf Justiermarkierungen (20), die an der Kunststoffplatte (17) angebracht sind, in Längsrichtung und in Querrichtung sich an bestimmten Stellen befinden,
b) die elektrischen Bauelemente (4, 15) werden einzeln in je eine Ausnehmung (3) der Kunststoffplatte (17) derart eingesetzt, daß die inneren elektrischen Stromzuführungen (7) je Pol zur Oberseite (21) und zur Unterseite (22) der Kunststoffplatte (17) gerichtet sind,
c) anschließend werden die Ausnehmungen (3) mit wenigstens einer Kunststoffolie (6) verschlossen und dadurch die elektrischen Bauelemente (4, 15) in den Ausnehmungen (3) gehalten,
d) der verbleibende Hohlraum zwischen den elektrischen Bauelementen (4, 15) und den Wänden der Ausnehmung (3) sowie der Kunststoffolie (6) werden danach vollständig mit aushärtbarem Gießharz gefüllt,
e) nach dem Aushärten des Gießharzes werden mindestens teilweise die inneren elektrischen Stromzuführungen (7) eines jeden Bauelementes (4, 15) sowohl auf der Oberseite (21) als auch auf der Unterseite (22) der Kunststoffplatte (17) unter Ausnutzung der Justiermarkierungen (20) freigelegt, indem das ausgehärtete Gießharz (5) und die Kunststoffolien (6) mit Öffnungen (8) versehen werden, deren Tiefe (10) bis zu den inneren Stromzuführungen (7) oder in die inneren Stromzuführungen (7) hineinreicht,
f) auf die Innenwandungen (12) der Öffnungen (8) und wengistens auf angrenzende Teilbereiche der Kunststoffolie (6) werden danach Metallschichten (11) aufgebracht,
g) die Kunststoffplatte (17) wird danach längs von Trennlinien (23, 24) in Längsrichtung und in Querrichtung in die einzelnen mit einer Isolierumhüllung versehenen elektrischen Bauelemente zerteilt.

13. Verfahren nach Anspruch 12, **dadurch gekennzeichnet,** daß die mit elektrischen Bauelementen (4, 15) versehenen, mit aushärtbarem Gießharz gefüllten Kunststoffplatten (17) nach dem Aushärten des Gießharzes einer Temperaturbehandlung (Temperung) bei einer Temperatur zwischen 210° und 250° C für eine Zeit von 1 bis 65 Stunden mit kurzen Temperzeiten bei höheren Temperaturen und umgekehrt unterworfen werden.

14. Verfahren nach Anspruch 12, **dadurch gekennzeichnet,** daß mehrere mit Bauelementen (4, 15) gefüllte Kunststoffplatten (17) zu einem Block zusammengefaßt werden, gemeinsam als Block mit Gießharz (5) zum Ausfüllen der Hohlräume und zum Aushärten desselben behandelt werden und eine gegebenenfalls erforderliche Temperaturbehandlung (Temperung) ebenfalls im Block vorgenommen wird.

15. Verfahren nach Anspruch 12, **dadurch gekennzeichnet,** daß die Ausnehmungen (3) untereinander durch an der Oberseite (21) und/oder an der Unterseite (22) der Kunststoffplatte (17) vorhandene Gießkanäle (27) verbunden werden, durch die insbesondere beim Vergießen mit aushärtbarem Gießharz im Block mehrerer gefüllter Kunststoffplatten (17) das aushärtbare Gießharz in die Ausnehmungen (3) unter erhöhtem Druck eingepreßt wird.

16. Verfahren nach Anspruch 12, **dadurch gekennzeichnet,** daß die Kunststoffplatte (17) spätestens vor dem Aufbringen der Metallschichten (11) auf der Oberseite (21) und auf der Unterseite (22) mit parallel zueinander verlaufenden Rinnen (25) mit senkrechten Wänden versehen wird, die in der Mitte zwischen jeweils zwei Reihen von Ausnehmungen (3) verlaufen und auf der Oberseite (22) und auf der Unterseite (23) der Kunststoffplatte (17) einander gegenüberstehen, und daß das Zerteilen der Trägerplatte (17) gemäß Verfahrensschritt g) in der Mitte der Rinnen (25) erfolgt, wonach in die sich ergebenden Teile wenigstens eine Nut (26) eingefräßt wird, die gleichzeitig den Isolationsabstand (14) zwischen den äußeren Anschlußelementen (9) bestimmt.

**Claims**

1. Chip-type electric component, which is provided with an insulating enclosure (1), and has internal electrically conducting supply leads (7) and, electrically connected to the latter through openings (8) in the insulating enclosure (1), external terminal elements (9), characterised by the features

    a) the insulating enclosure (1) consists of a frame (2) of insulating material, which surrounds a recess (3) in which the component (4, 15) is located and is surrounded by cured casting resin (5), and of at least one plastic film (6), which seals the recess (3) off from the outside,

    b) the frame (2), the cured casting resin (5) and the plastic film (6) consist of electrically insulating plastics material which withstands the temperatures occurring during soldering, in particular during flow soldering,

    c) the plastic film (6) and the cured casting resin (5) are perforated at opposite points by the openings (8), the depth (10) of which reaches as far as the internal supply leads (7) or into the internal supply leads (7),

    d) the external terminal elements (9) consist of metal layers (11), which are respectively located on the plastic film (6), on the inside walls (12) of the openings (8), on the parts of the supply leads (7) exposed by the latter, and on surface parts (13) of the frame (2) which are adjacent to the plastic film at right angles, where they are separated from each other by an insulating clearance (14).

2. Electric component according to Claim 1, characterised in that the frame (2) consists of epoxy resin, polyphenylene sulphide (PPS) or polyimide.

3. Electric component according to Claim 1, characterised in that the cured casting resin (5) consists of epoxy resin.

4. Electric component according to Claim 1, characterised in that the plastic films (6) consist of epoxy resin, filled phenolic resin, polyphenylene sulphide (PPS) or polyimide and have a thickness of 0.1 to 1 mm.

5. Electric component according to Claim 1, characterised in that the openings (8) are produced by drilling, milling or removal by laser and have a diameter of 0.1 to 2 mm.

6. Electric component according to Claim 1, characterised in that the internal supply leads (7) consist of aluminium (Al) or zinc (Zn) and copper (Cu) as the top layer.

7. Electric component according to Claim 1, characterised in that the metal layers (11) representing the external terminal elements (9) consist of galvanically applied metals with palladium (Pd) as the base metal, nickel (Ni) as the protective layer and tin-lead (Sn-Pb) as the solderable layer.

8. Electric component according to Claim 1, characterised in that the metal layers (11) representing the external terminal elements (9) consist of sprayed metal (Schoop method, metal sputtering).

9. Electric component according to Claim 8, characterised in that the metal layer (11) consists of white metal sprayed on by the Schoop method (for example Sn/Pb alloy).

10. Electric component according to Claim 8, characterised in that the metal layer (11) consists of a layer sequence of aluminium (Al) and the base metal, nickel (Ni) as the protective layer and a very thin palladium layer (Pd) for ensuring solderability and this layer sequence is sputtered on.

11. Electric component according to Claim 1, characterised in that the cross-section of the recess (3) in the frame (2) is adapted to the cross-section of the component (4, 15).

12. Method for producing an electric component according to one of Claims 1 to 11, in which a plurality of electric components are each inserted individually into recesses of a mould, cast with curable casting resin and, after curing, the mould together with the cured casting resin is split up into individual pieces which each represent an electric component provided with an insulating enclosure, characterised by the method steps

a) as mould, a plastic sheet (17) is used, the thickness (18) of which is slightly greater than the width (19) of the electric components (4, 15) and which is provided with recesses (3) which are open to the upper side (21) and/or to the lower side (22) of the plastic sheet (17), correspond to the cross-section of the electric components (4, 15) and are situated at specific locations in the longitudinal direction and in the transverse direction with regard to adjusting marks (20) which are made on the plastic sheet (17),

b) the electric components (4, 15) are inserted individually into one recess (3) each of the plastic sheet (17) in such a way that the internal electrical supply leads (7) are aligned with one pole towards the upper side (21) and one pole towards the lower side (22) of the plastic sheet (17),

c) subsequently, the recesses (3) are sealed by at least one plastic film (6) and the electric components (4, 15) are thereby held in the recesses (3),

d) thereafter, the remaining cavity between the electric components (4, 15) and the walls of the recess (3) as well as that between the former and the plastic film (6) are completely filled with curable casting resin,

e) after curing of the casting resin, the internal electrical supply leads (7) of each component (4, 15) both on the upper side (21) and on the lower side (22) of the plastic sheet (17) are at least partially exposed, making use of the adjusting marks (20), by providing the cured casting resin (5) and the plastic films (6) with openings (8) of which the depth (10) reaches as far as the internal supply leads (7) or into the internal supply leads (7),

f) thereafter, metal layers (11) are applied to the inside walls (12) of the openings (8) and at least to adjacent zones of the plastic film (6),

g) thereafter, the plastic sheet (17) is split up along parting lines (23, 24) in the longitudinal direction and in the transverse direction into the individual electric components provided with an insulating enclosure.

13. Method according to Claim 12, characterised in that the plastic sheets (17) provided with electric components (4, 15) and filled with curable casting resin are subjected after curing of the casting resin to a temperature treatment (conditioning) at a temperature of between 210° and 250°C for a time of 1 to 65 hours with short conditioning times at relatively high temperatures and vice versa.

14. Method according to Claim 12, characterised in that a plurality of plastic sheets (17) filled with components (4, 15) are combined into a block, are treated as a block with casting resin (5) for filling the cavitities and for curing the same and a temperature treatment (conditioning) which may be necessary is likewise performed in the block.

15. Method according to Claim 12, characterised in that the recesses (3) are connected to one another by casting channels (27) present on the upper side (21) and/or on the lower side (22) of the plastic sheet (17), through which channels the curable casting resin is forced into the recesses (3) under increased pressure, in particular when casting with curable casting resin in the block of a plurality of filled plastic sheets (17).

16. Method according to Claim 12, characterised in that, at the latest before applying the metal layers (11), the plastic sheet (17) is provided on the upper side (21) and on the lower side (22) with mutually parallel running troughs (25) with vertical walls, which troughs run in the centre between two rows of recesses (3) in each case and are opposite one another on the upper side (22) and on the lower side (23) of the plastic sheet (17), and in that the splitting of the substrate sheet (17) according to method step g) is performed in the centre of the troughs (25), whereafter at least one groove (26) is milled into the parts obtained, which groove at the same time determines the insulating clearance (14) between the external terminal elements (9).

**Revendications**

1. Composant électrique du type microplaquette, qui est pourvu d'une enveloppe isolante (1) et comporte des éléments internes électriquement conducteurs d'alimentation en courant (7) et des éléments extérieurs de raccordement (9) reliés électriquement aux éléments précédents par des ouvertures (8) ménagées dans l'enveloppe isolante (1), caractérisé par les particularités suivantes:

a) l'enveloppe isolante (1) est formée par un cadre (2) en matériau isolant, qui entoure un évidement (3) dans lequel est situé le composant (4,15), qui est enveloppé par une résine de coulée durcie (5), et par au moins une feuille de matière plastique (6), qui ferme l'évidement (3) vers de l'extérieur,

b) le cadre (2), la résine de coulée durcie (5) et la feuille de matière plastique (6) sont réalisées en une matière plastique électriquement isolante, qui résiste à des températures qui apparaissent lors du soudage, notamment lors du soudage à la vague,

c) la feuille de matière plastique (6) et la résine de coulée durcie (5) sont interrompues, en des emplacements mutuellement opposés, par des ouvertures (8) qui ont une profondeur (10) telle qu'elles s'étendent jusqu'aux éléments intérieurs d'alimentation en courant (7) ou pénètrent dans ces éléments,

d) les éléments extérieurs de raccordement (9) sont constitués par des couches métalliques (11) qui sont situées respectivement sur la feuille en matière plastique (6), sur les parois intérieures (12) de l'ouverture (8), sur les parties, libérées par ces ouvertures, des éléments d'alimentation en courant (7) et sur des éléments (13) de la surface du cadre (2), qui jouxtent perpendiculairement la feuille en matière plastique, et au niveau desquels les éléments extérieurs sont séparés les uns des autres par une distance d'isolation (14).

2. Composant électrique suivant la revendication 1, caractérisé par le fait que le cadre (2) est formé d'une résine époxy, de sulfure de polyphénylène (PPS) et un polyimide.

3. Composant électrique suivant la revendication 1, caractérisé par le fait que la résine de coulée durcie (5) est une résine époxy.

4. Composant électrique suivant la revendication 1, caractérisé par le fait que les feuilles de matière plastique (6) sont constituées par une résine époxy, une résine phénolique chargée, du sulfure de polyphényl (PPS) ou un polymide et possèdent une épaisseur comprise entre 0,1 et 1 mm.

5. Composant électrique suivant la revendication 1, caractérisé par le fait que les ouvertures (8) sont formées par un perçage, fraisage ou enlèvement de matière au laser et possèdent un diamètre compris entre 0,1 et 2 mm.

6. Composant électrique suivant la revendication 1, caractérisé par le fait que les éléments intérieurs d'alimentation en courant (7) sont formés par de l'aluminium (Al) ou du zinc (Zn) ou du cuivre (Cu) constituant la couche supérieure.

7. Composant électrique suivant la revendication 1, caractérisé par le fait que les couches métalliques (11), qui représentent des éléments extérieurs de raccordement (9), sont constitués par des métaux déposés galvaniquement, moyennant l'utilisation de palladium (Pd) comme couche de base, de nickel (Ni) comme couche de protection et d'étain-plomb (Sn-Pb) comme couche soudable.

8. Composant électrique selon la revendication 1, caractérisé en ce que les couches métalliques (11), qui représentent les éléments extérieurs de raccordement (9), sont constitués par un métal moulé par injection (procédé de choopage, pulvérisation métallique).

9. Composant électrique suivant la revendication 8, caractérisé par le fait que la couche métallique (11) est constituée par un métal blanc déposé par choopage (par exemple un alliage Sn/Pb).

10. Composant électrique suivant la revendication 8, caractérisé par le fait que la couche métallique (11) est réalisée sous la forme d'une succession de couches utilisant de l'aluminium (Al) comme métal de base, du nickel (Ni) comme couche de protection et une couche très mince de palladium (Pd) assurant la soudabilité, et que cette succession de couches est déposée par pulvérisation.

11. Composant électrique suivant la revendication 1, caractérisé par le fait que la section transversale de l'évidement (3) ménagé dans le cadre (2) est adaptée à la section transversale du composant (4,15).

12. Procédé pour fabriquer un composant électrique suivant l'une des revendications 1 à 11, selon lequel on utilise plusieurs composants électriques placés respectivement dans des évidements individuels d'un moule, que l'on coule une résine de coulée durcissable et qu'après durcissement, on subdivise le moule ainsi que la résine de coulée durcie pour former des pièces individuelles qui représentent chacune un composant électrique comportant une enveloppe isolante, caractérisé par les étapes opératoires suivantes:

a) on utilise comme moule une plaque de matière plastique (17), dont l'épaisseur (18) est légèrement supérieure à la largeur (19) des composants électriques (4,15) et qui comporte des évidements (3) qui s'ouvrent en direction de la face supérieure (21) et/ou de la face inférieure (22) de la plaque en matière plastique (17), correspondent à la section transversale des composants électriques (4,15) et sont situés à des emplacements déterminés dans la direction longitudinale et dans la direction transversale par rapport à des marques d'ajustement (20), qui sont disposées sur la plaque en matière plastique (17),

b) on insère les composants électriques (4,15) individuellement dans les évidements respectifs (3) de la plaque de matière plastique (17) de telle sorte que les éléments électriques intérieurs d'alimentation en courant (7) pour chaque pôle, sont dirigés vers la face supérieure (21) et vers la face inférieure (22) de la couche en matière plastique (17);

c) ensuite, on ferme les évidements (3) en utilisant une feuille de matière plastique (6), les composants électriques (4,15) étant de ce fait maintenus dans les évidements (3),

d) on remplit ensuite complètement avec une résine de coulée durcissable la cavité qui subsiste entre les composants électriques (4,15) et les parois de l'évidement (3) ainsi que la feuille de matière plastique (6),

e) après durcissement de la résine de coulée, on dégage au moins en partie les éléments électriques intérieurs d'alimentation en courant (7) de chaque composant (4,15) aussi bien au niveau de la face supérieure (21) qu'au niveau de la face inférieure (22) de la plaque de matière plastique (17) en utilisant les marques d'ajustement (20), en aménageant, dans la résine de coulée durcie (5) et dans les feuilles de matière plastique (6), des ouvertures (8) qui ont une profondeur (10) telle qu'elles s'étendent jusqu'aux éléments intérieurs d'alimentation en courant (7) ou dans ces éléments,

f) on dépose ensuite les couches métalliques (11) sur les parois intérieures (12) et les ouvertures (8) et au moins sur des zones partielles contiguës de la feuille de matière plastique (6),

g) ensuite, on subdivise la plaque de matière plastique (17) le long de lignes de séparation (23,24) dans la direction longitudinale et dans la direction transversale, pour obtenir les différents composants électriques équipés d'une enveloppe isolante.

13. Procédé suivant la revendication 12, caractérisé par le fait qu'après durcissement de la résine de coulée, on soumet les plaques de matière plastique (17) équipées des composants électriques (4,15) et remplies par la résine durcissable, à un traitement thermique (recuit) à une température comprise entre 210° et 250°C pendant une durée comprise entre 1 et 65 heures avec de brèves durées de recuit, à des températures supérieures, et inversement.

14. Procédé suivant la revendication 12, caractérisé par le fait qu'on réunit plusieurs plaques de matière plastique (17) remplies par des composants (4,15), pour former un bloc, auquel on applique en commun une résine de coulée (5) servant à remplir les cavités et que l'on fait durcir, et on applique également au bloc un traitement thermique éventuellement nécessaire (recuit).

15. Procédé suivant la revendication 12, caractérisé par le fait qu'on réunit entre eux les évidements (3) au moyen de canaux de coulée (27) présents sur la face supérieure (21) et/ou sur la face inférieure (22) de la plaque en matière plastique (17) et dans lesquels, notamment lors de la coulée réalisée avec une résine de coulée durcissable, on refoule la résine de coulée durcissable sous une pression accrue dans les évidements (3), à l'intérieur du bloc formé de plusieurs plaques de matière plastique chargée (17).

16. Procédé suivant la revendication 12, caractérisé par le fait qu'on ménage dans la plaque en matière plastique (17), au plus tard avant le dépôt des couches métalliques (11) sur la face supérieure (21) et sur la face inférieure (22), des rainures (25) parallèles entre elles et possédant des parois verticales, et qui s'étendent au centre entre deux rangées respectives d'évidements (3) et sont disposées réciproquement en vis-à-vis sur la face supérieure (22) et sur la face inférieure (23) de la plaque de matière plastique (17), et que la subdivision de la plaque de support (17) est réalisée, conformément à l'étape opératoire g), au centre des rainures (25), à la suite de quoi on forme par fraisage, dans les éléments obtenus, au moins une gorge (26) qui détermine simultanément la distance d'isolation (14) entre les éléments extérieurs de raccordement (9).

# FIG 1

# FIG 2

# FIG 3

FIG 4

FIG 5

FIG 6